# EUROPEAN PATENT APPLICATION

(11) **EP 1 607 460 A2**
(43) Date of publication of application: **21.12.2005**
(21) Application number: 05253650.5
(22) Date of filing: 14.06.2005
(51) Int. Cl.: C09J 175/04, C09K 3/10

(54) **Moisture setting composition and adhesive composition**

(30) Priority: 16.06.2004 JP 2004178597
(71) Applicant: TOAGOSEI CO., LTD., Tokyo 105-8419 (JP)
(72) Inventor: Inukai, Hiroshi c/o Toagosei Co, Ltd, Nagoya-shi Aichi-ken 455-0027 (JP); Yoneda, Kotaro c/o Toagosei Co, Ltd, Nagoya-shi Aichi-ken 455-0027 (JP); Iida, Akihito c/o Toagosei Co, Ltd, Nagoya-shi Aichi-ken 455-0027 (JP); Mochizuki, Katsunobu c/o Toagosei Co, Ltd, Nagoya-shi Aichi-ken 455-0027 (JP)
(74) Representative: Sherrard-Smith, Hugh

(57) **Abstract**

The moisture setting composition of the present invention comprises 100 parts by mass of polyurethane having a hydrolyzable silyl group and 10 to 200 parts by mass of a vinyl polymer. The polyurethane has at least two hydrolyzable silyl groups per molecule on average and the vinyl polymer has a weight average molecular weight of 500 to 30,000. The adhesive composition of the present invention comprises the moisture setting composition.

## Description

The present invention relates to a moisture setting composition curable at ambient temperature, and more particularly, to a moisture setting composition exhibiting excellent tensile and adhesion properties, and weather resistance, and useful as a sealing material and an elastic adhesive agent.

A polymer having an alkoxysilyl group is used as a base polymer for a sealing material and an elastic adhesive agent. In particular, a polyoxyalkylene based polymer having an alkoxysilyl group, because of its excellent workability and flexibility, has been widely used in sealing materials and elastic adhesive agents. A silylated polyoxyalkylene (modified silicone) is synthesized by the reaction between a polyoxyalkylene having a double bond introduced at both ends and methyldimethoxyhydrosilane and exhibits excellent tensile property and workability. However, the adhesion and weather resistance properties of the modified silicone are sometimes not sufficient to be used as a sealing material and an elastic adhesive agent. On the other hand, a polymer having a hydrolyzable silyl group can be obtained by the reaction between a polyoxyalkylene polymer having isocyanate terminal groups and a compound having a reactive hydrogen atom capable of reacting with the isocyanate terminal groups and an alkoxysilyl group. The polyoxyalkylene polymer has at least two urethane bonds per molecule. A polymer having a hydrolyzable silyl group, which has at least two hydrolyzable silyl groups per molecule on average, is known to be inexpensive and exhibit high strength. However, tensile properties, such as elongation, and adhesion and weather resistance properties of the polymer are not sufficient for the aforementioned applications. Under these circumstances, a polymer exhibiting excellent tensile and adhesion properties and weather resistance has been desired.

Accordingly, it is an objective of the present invention to provide a moisture setting composition exhibiting excellent tensile and adhesion properties, and weather resistance, and to provide an adhesive composition containing the moisture setting composition.

To achieve the foregoing and other objectives and in accordance with the purpose of the present invention, a moisture setting composition is provided. The moisture setting composition includes 100 parts by mass of polyurethane having a hydrolyzable silyl group and 10 to 200 parts by mass of a vinyl polymer. The polyurethane has at least two hydrolyzable silyl groups per molecule on average and the vinyl polymer has a weight average molecular weight of 500 to 30,000.

The present invention also provides an adhesive composition. The adhesive composition includes the moisture setting composition.

Other aspects and advantages of the invention will become apparent from the following description, illustrating by way of example the principles of the invention.

A moisture setting composition according to an embodiment of the present invention comprises polyurethane having a hydrolyzable silyl group and a vinyl polymer. The polyurethane has at least two hydrolyzable silyl groups per molecule on average and is synthesized by a known method, for example, described in Japanese Examined Patent Publication No. 46-30711. Specifically, the polyurethane is synthesized through a first step of synthesizing polyurethane component having isocyanate terminal groups and a second step of performing a reaction using the polyurethane component. In the first step, a polyol is reacted with a multifunctional isocyanate compound to synthesize polyurethane component. The polyurethane component has at least two isocyanate terminal groups. In the second step, the polyurethane component is reacted with a component having a reactive hydrogen atom capable of reacting with the isocyanate terminal groups and an alkoxysilyl group to synthesize the polyurethane.

Examples of such polyols used in the first step include lactone polyol, polyester polyol, polyoxyalkylene polyol, polyoxycycloalkylene polyol, polyolefin polyol, and alkylene oxide adducts thereof. Of them, a diol and triol of a polyoxyalkylene are preferable and polyoxypropylene diol and polyoxypropylene triol are more preferable. When a diol of a polyoxyalkylene is used as a polyol, the polyurethane has a polyoxyalkylene structure.

Polypropylene diol and polypropylene triol may be synthesized by use of a composite metal cyanide complex catalyst. Furthermore, a terminal group of polypropylene diol and polypropylene triol is generally a secondary hydroxyl group. To improve the reactivity of polypropylene diol and polypropylene triol, the terminal group may be a primary hydroxyl group. Each of the terminal groups of polypropylene diol and polypropylene triol may be converted from a secondary hydroxyl group into a primary hydroxyl group by adding an ethylene oxide to the terminal group.

The number average molecular weight of the polyol is preferably 500 to 30,000, more preferably 1,000 to 15,000, and most preferably 1,500 to 5,000. When the number average molecular weight of the polyol is less than 500, the proportion of a urethane bond tends to become excessively high, increasing the viscosity of the moisture setting composition, with the result that the workability of the moisture setting composition may decrease. On the other hand, when the number average molecular weight of the polyol exceeds 30,000, the reaction rate of the polyol and the multifunctional isocyanate compound decreases, with the result that the purity of isocyanate terminal groups of the polyurethane component obtained in the first step may decrease. The value of molecular weight distribution of a polyol may be 1.6 or less. The value of molecular weight distribution can be obtained by dividing the weight average molecular weight by the number average molecular weight of the polyol.

Examples of such multifunctional isocyanate compounds used in the first step include tolylene diisocyanate, xylene diisocyanate, naphthalene diisocyanate, diphenylmethane diisocyanate, hexamethylene diisocyanate, isophorone diisocyanate, a cyclic trimer of hexamethylene diisocyanate, and triphenylmethane triisocyanate.

The reaction of the first step is performed by mixing the polyol and the multifunctional isocyanate compound in the presence or absence of a solvent. The reaction temperature of the first step may range from ambient temperature (about 25°C) to 100°C. In this reaction, to accelerate the urethane reaction between the polyol and the multifunctional isocyanate compound, a catalyst may be further mixed. Examples of such catalysts include a known compound such as titanium compounds, tin compounds, a reaction product between dibutyltin oxide and phthalate, organic aluminium compounds, chelate compounds, zinc octylate, iron naphthenate and bismuth compounds. Examples of such titanium compounds include tetrabutyl titanate and tetrapropyl titanate. Examples of such tin compounds include dibutyltin dilaurate, dibutyltin maleate, dibutyltin diacetate, dibutyltin diacetylacetonate, tin octylate, tin naphthenate, tin laurate, and tin versatate. Examples of such organic aluminium compounds include aluminium tris(acetylacetonate), aluminium tris(ethylacetoacetate), and diisopropoxy aluminium ethyl acetoacetate. Examples of such chelate compounds include zirconium tetra(acetylacetonate) and titanium tetra(acetylacetonate). Examples of such bismuth compounds include bismuth-tris(neodecanoate), bismuth-tris(2-ethylhexanoate), and bismuth octylate.

The number average molecular weight of the polyurethane component is preferably 2000 to 100,000, and more preferably 5,000 to 60,000. When the number average molecular weight of the polyurethane component is less than 2000, the tensile property, such as elongation of the cured moisture setting composition, may decrease. On the other hand, when the number average molecular weight of the polyurethane component exceeds 100,000, the viscosity of the moisture setting composition increases, with the result that the workability of the moisture setting compound may decrease.

The component used in the second step is represented by the chemical formula (1) below: 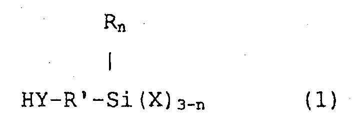 where n represents an integer of 0 to 2; "-Y-" represents a bivalent group "-NZ-" in which Z represents a hydrogen atom, alkyl group, cycloalkyl group, aryl group, or aralkyl group; "-R'-" represents an alkylene group that may have a substituent; R represents an alkyl group having 1 to 3 carbon atoms; and X represents an alkoxy group having 1 to 3 carbon atoms.

Examples of such components include γ-aminopropyltrimethoxysilane, γ-aminopropyltriethoxysilane, γ-aminopropylmethyldimethoxysilane, γ-aminopropylmethyldiethoxysilane, N-β(aminoethyl)-γ-aminopropyltrimethoxysilane, N-β(aminoethyl)-γ-aminopropyltriethoxysilane, N-β(aminoethyl)-γ-aminopropylmethyldimethoxysilane, N-phenyl-γ-aminopropyltrimethoxysilane, and N-ethylhexyl propionate-γ-aminopropyltrimethoxysilane.

The reaction of the second step is performed by mixing the polyurethane component and the other component in the presence or absence of a solvent. The reaction temperature of the second step may range from ambient temperature to 100°C. In this reaction, to accelerate the reaction between the isocyanate terminal groups of polyurethane component and an amino group of the component, a catalyst may be further mixed. Examples of such catalysts include a known compound such as tin compounds, bismuth compounds, and titanium compounds.

The weight average molecular weight of the vinyl polymer is 500 to 30,000, preferably 1,000 to 15,000, and more preferably, 1,500 to 13,000. When the weight average molecular weight of the vinyl polymer is less than 500, the heat resistance and adhesion strength of the moisture setting composition decrease. As the weight average molecular weight of the vinyl polymer increases, the moisture setting composition can exhibit excellent weather resistance and heat resistance. However, when the weight average molecular weight of the vinyl polymer exceeds 30,000, the viscosity of the moisture setting composition excessively increases, with the result that the workability of the moisture setting composition significantly decreases.

A vinyl monomer used as a raw material of the vinyl polymer is not particularly limited. Examples of such vinyl monomers include (metha)acrylate ester, (metha)acrylic acid, styrene, α-methylstyrene, acrylonitrile, and vinyl acetate. Of them, (metha)acrylate ester is preferable for the reason that copolymerizability, weather resistance, and water resistance are high. Examples of such (metha)acrylate esters include alkyl (metha)acrylates, alicyclic alkyl (metha)acrylates, and (metha)acrylate esters containing a heteroatom. Examples of such alkyl (metha)acrylates include methyl (metha) acrylate, ethyl (metha) acrylate, propyl (metha)acrylate, isopropyl (metha)acrylate, butyl (metha)acrylate, isobutyl (metha)acrylate, s-butyl (metha)acrylate, t-butyl (metha)acrylate, neopentyl (metha)acrylate, 2-ethylhexyl (metha)acrylate, isodecyl (metha)acrylate, lauryl (metha)acrylate, tridecyl (metha)acrylate, and stearyl (metha)acrylate. Examples of such alicyclic alkyl (metha)acrylates include cyclohexyl (metha)acrylate, isobornyl (metha)acrylate, and tricyclodecynyl (metha)acrylate. Examples of such (metha)acrylate esters containing a heteroatom include 2-methoxyethyl (metha)acrylate , dimethylaminoethyl (metha)acrylate, chloroethyl (metha)acrylate, trifluoroethyl (metha)acrylate, and tetrahydrofurfuryl (metha)acrylate. They may be used singly or in the form of a mixture of two or more types as a raw material for the vinyl polymer. Of them, a (metha)acrylate ester is preferable because the resultant vinyl polymer exhibits excellent weather resistance. Furthermore, a (metha)acrylic copolymer is more preferable as the vinyl polymer since the resultant moisture setting composition exhibits excellent tensile property. More specifically, the vinyl polymer is particularly preferably a copolymer formed of an acrylate ester in which an alcohol residue responsible for forming an ester has 4 to 8 carbon atoms, and a methacrylate ester in which an alcohol residue responsible for forming an ester has 1 to 4 carbon atoms. The ratio of the acrylate ester to the methacrylate ester of the copolymer is preferably 50-95:5-50 (parts by mass).

The vinyl polymer may include a monomer unit having an isocyanate group, a hydrolyzable silyl group or a crosslinkable functional group, and may preferably include a monomer unit having a hydrolyzable silyl group. Examples of such hydrolyzable silyl groups include an alkoxysilyl group, examples of such crosslinkable functional groups include an epoxy group. When the vinyl polymer has at least one type of a functional group selected from the group consisting of an isocyanate group, alkoxysilyl group and epoxy group, the total content of the isocyanate group, alkoxysilyl group and epoxy group of the vinyl polymer is preferably 30% by mass or less, and more preferably 20% by mass or less in terms of a monomer unit. When the total content of the isocyanate group, alkoxysilyl group and epoxy group exceeds 30% by mass, the storage stability of the resultant moisture setting composition may decrease.

Examples of such monomers having an isocyanate group include (metha)acryloxyethyl isocyanate, methacrylic isocyanate and dimethylmethaisopropenylbenzyl isocyanate.

As the monomer having an alkoxysilyl group, a compound containing a silyl group and represented by the following chemical formula (2) may be mentioned. Examples of such compounds include vinyl silanes, (metha)acrylate esters containing a silyl group, vinyl ethers containing a silyl group, and vinyl esters containing a silyl group.

-Si(R¹)ₐX¹₍₃₋ₐ₎ (2)

where, R¹ represents a hydrogen atom, alkyl group, aryl group or aralkyl group; X¹ represents a halogen atom, alkoxy group, acyloxy group, phenoxy group, mercapto group, amino group, iminoxy group or alkenyloxy group; and a represents 1 or 2.

Examples of such vinyl silanes include vinyltrimethoxysilane, vinyl triethoxysilane, vinylmethyldimethoxysilane, vinylmethoxydimethylsilane and vinyltrichlorosilane. Examples of such (metha)acrylate esters containing a silyl group include trimethoxysilylpropyl (metha)acrylate, triethoxysilylpropyl (metha)acrylate, and methyldimethoxysilylpropyl (metha)acrylate. Examples of such vinyl ethers containing a silyl group include trimethoxysilylpropylvinyl ether. Examples of such vinyl esters containing a silyl group include trimethoxysilyl vinyl undecanoate. They may constitute a monomer unit singly or in the form of a mixture of two or more types. Of them, (metha)acrylate ester containing a silyl group and having a methoxy group or ethoxy group is preferable for the reason that a copolymerizability of this compound with (metha)acrylate ester is good and the vinyl polymer exhibits excellent heat resistance.

Examples of a method for introducing an alkoxysilyl group into a vinyl polymer include:
(a) a method comprising copolymerizing a monomer having an alkoxysilyl group with, for example, (metha)acrylate ester;
(b) a method comprising reacting a vinyl polymer having a hydroxyl group with the multifunctional isocyanate compound to synthesize a vinyl polymer having isocyanate terminal groups, followed by reacting the vinyl polymer thus obtained with a compound having a reactive hydrogen atom capable of reacting with the isocyanate terminal groups and an alkoxysilyl group;
(c) a method comprising copolymerizing a plurality of monomers having an isocyanate group to synthesize a vinyl copolymer having isocyanate groups and at least one urethane bond per molecule on average, followed by reacting the vinyl polymer thus obtained with a compound having a reactive hydrogen atom capable of reacting with the isocyanate groups and an alkoxysilyl group and represented by the above chemical formula (1); and
(d) a method comprising reacting a vinyl polymer having a hydroxyl group with a compound having isocyanate groups and an alkoxysilyl group.

Examples of such above monomers having an epoxy group include glycidyl (metha)acrylate, epoxycyclohexane (metha)acrylate, allylglycidyl ether, and vinylglycidyl ether.

A vinyl polymer can be obtained by polymerizing the vinyl monomers selected depending on the intended use, by a known method. The polymerization of the vinyl monomers may be performed by a solution polymerization, mass polymerization, emulsion polymerization, or suspension polymerization. When vinyl monomers are polymerized by the solution polymerization, a solvent to be used in the solution polymerization may be an organic solvent conventilnally used in the solution polymerization. Examples of such organic solvents include cyclic ethers, aromatic hydrocarbon compounds, esters, ketones, and alcohols. Examples of such cyclic ethers include tetrahydrofuran and dioxane. Examples of such aromatic hydrocarbons include benzene, toluene, and xylene. Examples of such esters include ethyl acetate and butyl acetate. Examples of such ketones include acetone, methylethyl ketone and cyclohexanone. Examples of such alcohols include methanol, ethanol, and isopropyl alcohol. These may be used singly or in the form of a mixture of two or more types.

A polymerization initiator used in polymerization of vinyl monomers may be a radical polymerization initiator. Examples of such radical polymerization initiators include peroxides, azo compounds, and inorganic peroxides. Examples of such peroxides include diisopropylperoxydicarbonate, tertiary butylperoxypivalate, benzoyl peroxide, lauroyl peroxide, ditertiary butyl peroxide, and ditertiary hexyl peroxide, and ditertiary amyl peroxide. Examples of such azo compounds include azobisisobutyronitrile, and azobisisovaleronitrile. Examples of such inorganic peroxides include ammonium persulfate, and potassium persulfate. In polymerization of vinyl monomers, a chain transfer agent may be used. However, the weather resistance of the vinyl polymer obtained decreases. Therefore, no chain transfer agent is preferably used in polymerization of vinyl monomers. Examples of such chain transfer agents include alcohols and mercaptan based compounds.

The polymerization temperature of vinyl monomers is preferably 150 to 350°C, more preferably 180 to 300°C, and most preferably 190 to 250°C, because the resultant vinyl polymer can exhibit excellent weather resistance. The polymerization of vinyl monomers may be performed in accordance with batch polymerization, semi-continuous polymerization, or continuous polymerization. Of them, continuous polymerization using a stirring type reaction vessel is preferable for the reason that the productivity for a vinyl polymer is high. Such a continuous polymerization is disclosed in Japanese National Phase Laid-Open Patent Publication No. 57-502171, Japanese Laid-Open Patent Publication No. 59-6207 and Japanese Laid-Open Patent Publication No. 60-215007.

The glass transition temperature of the vinyl polymer is preferably -70 to 10°C. When the glass transition temperature of the vinyl polymer exceeds 10°C, the viscosity of the resultant moisture setting composition becomes excessively high, with the result that the workability of the moisture setting composition may decrease.

The content of the vinyl polymer in a moisture setting composition is 10 to 200 parts by mass, and preferably, 10 to 150 parts by mass based on the polyurethane as being 100 parts by mass. When the content of the vinyl polymer is less than 10 parts by mass, the weather resistance of the moisture setting composition excessively decreases. On the other hand, when the content of the vinyl polymer exceeds 200 parts by mass, the adhesive strength of the moisture setting composition excessively decreases. The vinyl polymers may be contained singly or in the form of a mixture of two or more types in the moisture setting compound.

The moisture setting composition is cured by three-dimensionally crosslinking by an accelerator to form a solid having a rubber-like elasticity. Examples of such accelerators includes titanates, tin carboxylates, a reaction product between dibutyl tin oxides and phthalates, organic aluminium compounds, chelate compounds, lead octylate, iron naphthenate, bismuth compounds, amine based compounds and salts thereof, low molecular weight polyamide resins each obtained from a reaction between a polybasic acid and an excessive amount of a polyamine relative to that of the polybasic acid, and silanol condensation catalysts. Examples of such titanates include tetrabutyl titanate and tetrapropyl titanate. Examples of such tin carboxylates include dibutyltin dilaurate, dibutyltin maleate, dibutyltin diacetate, dibutyltin diacetylacetonate, tin octylate, tin naphthenate, tin laurate, and tin versatate. Examples of such organic aluminium compounds include aluminium tri(acetylacetonate), aluminium trisethyl acetoacetate and diisopropoxy aluminium ethyl acetoacetate. Examples of such chelate compounds include zirconium tetra(acetylacetonate) and titanium tetra(acetylacetonate). Examples of such bismuth compounds include bismuth-tris(neodecanoate), bismuth-tris(2-ethylhexanoate), and bismuth octylate. Examples of such amine based compounds include butylamine, octylamine, dibutylamine, monoethanolamine, diethanolamine, triethanolamine, triethylamine, diethylenetriamine, triethylenetetramine, oleylamine, cyclohexylamine, benzylamine, diethylaminopropylamine, xylenediamine, triethylenediamine, guanidine, diphenylguanidine, 2,4,6-tris(dimethylaminomethyl) phenol, morpholine, N-methylmorpholine, 2-ethyl-4-methylimidazole, 1,4-diazabicyclo[2,2,2]octane (DABCO) and 1,8-diazabicyclo[5,4,0]undecene-7(DBU). Examples of such salts of an amine based compound include carboxylates of the aforementioned examples. Examples of such silanol condensation catalysts include reaction products between an epoxy compound and an excessive amount of a polyamine relative to the epoxy compound, acidic catalysts and basic catalysts. They may be used singly or in the form of a mixture of two or more types for curing the moisture setting composition. Of them, tin carboxylates are preferable for the reason that the cure rate of the moisture setting resin can be easily controlled. The amount of the accelerating agent for use in curing the moisture setting composition is preferably 0.1 ppm to 10%, and more preferably 0.01 to 3%, based on the entire amount of polymer contained in the moisture setting composition.

The vinyl polymer plays a role as a plasticizer, for example, depending upon the type of a vinyl monomer used as a raw material. However, the moisture setting composition may further contain a plasticizer. Examples of such plasticizers include phthalic acid esters, ethers, aliphatic carboxylic acid alkyl esters, and phosphoric acid esters. Examples of such phthalic acid esters include dibutylphthalate, di-2-ethylhexylphthalate, and diisononylphthalate. Examples of such ethers include polypropylene glycol and polyethylene glycol. Examples of such aliphatic carboxylic acid alkyl esters include di-2-ethylhexyl adipate, diisodecyl succinate, and dibutyl sebacate. Examples of such phosphoric acid esters include trioctyl phosphate, tricresyl phosphate. They may be contained singly or in the form of a mixture of two or more types.

The moisture setting composition may further include an epoxy rein. The type of the epoxy resin to be contained is not particularly limited and a conventional epoxy resin may be contained. Examples of such epoxy resins include flame-retardant epoxy resins, glycidyl ethers of polyols, and epoxy compounds of unsaturated polymers. Examples of such flame-retardant epoxy resins include epichlorohydrin-bisphenol A-type epoxy resin, epichlorohydrin-bisphenol F-type epoxy resin, and glycidyl ethers of tetrabromo bisphenol A. Examples of such glycidyl ethers of polyols include a novolak-type epoxy resin, hydrogenated bisphenol A-type epoxy resin, a glycidyl ether-type epoxy resin of a bisphenol A propylene oxide adduct, p-oxybenzoic acid glycidyl ether ester-type epoxy resin, m-aminophenol based epoxy resin, diaminodiphenyl methane based epoxy resin, urethane modified epoxy resin, various types of alicyclic epoxy resins, N,N-diglycidylaniline, N,N-diglycidyl-o-toluidine, triglycidyl isocyanurate, polyalkylene glycol diglycidyl ether, and glycerin. Examples of such epoxy compounds of unsaturated polymers include hydantoin-type epoxy resins and petroleum resins. Of them, a compound having at least two epoxy groups per molecule is preferable for the reason that such a compound has high reactivity in curing of the moisture setting composition and further the moisture setting composition when curing easily forms a three-dimensional network, and further, a bisphenol A-type epoxy resin and a novolak-type epoxy resin are more preferable.

The content of the epoxy resin in the moisture setting composition is preferably 10 to 100 parts by mass based on the vinyl polymer as being 100 parts by mass. When the content of an epoxy resin is less than 10 parts by mass, the moisture setting composition may not easily form a three-dimensional network during curing. On the other hand, when the content of the epoxy resin exceeds 100 parts by mass, the weather resistance of the moisture setting composition may decrease.

In mixing the epoxy rein in the moisture setting composition, a curing agent for the epoxy resin is preferably mixed in the moisture setting composition. Examples of such curing agents for the epoxy resin include primary amines, a straight-chain diamine represented by (CH₃)₂N(CH₂)ₙN(CH₃)₂ (where n represents an integer of 1 to 10), secondary or tertiary amines, ketimines, acid anhydrides, various types of polyamide resins, dicyandiamide and derivatives thereof, and various types of imidazoles. Examples of such primary amines include ethylenediamine, diethylenetriamine, triethylenetetramine, tetraethyelenpentamine, hexamethylenediamine, diethylaminopropylamine, N-aminoethylpiperazine, isophoronediamine, diaminodicyclohexylmethane, m-xylenediamine, m-phenylenediamine, diaminodiphenylmethane, and diaminophenylsulfone. Examples of such secondary or tertiary amines include a straight-chain tertiary amine represented by (CH₃)₂-N(CH₂)ₙ-(CH₃) (where n represents an integer of 0 to 10), tetramethylguanidine, an alkyl tertiary monoamine represented by N{(CH₂)₂CH₃}₃ (where n represents an integer of 1 to 10), triethanol amine, piperidine, N, N'-dimethylpiperadine, triethylenediamine, pyridine, picoline, diazabicycloundecene, benzyldimethylamine, 2-(dimethylaminomethyl) phenol, 2,4,6-tris(dimethylaminomethyl) phenol, lamiron C-260(manufactured by BASF), Araldit HY-964 (manufactured by CIBA) and Mensen diamine (manufactured by Rohm and Haas). Examples of such ketimines include 1,2-ethylenebis(isopentylidene imine), 1,2-hexylenebis(isopentylidene imine), 1,2-propylenebis(isopentylidene imine), p,p'-biphenylenebis(isopentylidene imine), 1,2-ethylenebis(isopropylidene imine), 1,3-propylenebis(isopropylidene imine), and p-phenylenebis(isopentylidene imine). Examples of such acid anhydrides include anhydrous phthalic acid, anhydrous trimellitic acid, anhydrous pyromellitic acid, and anhydous benzophenone tetracarboxilic acid.

To increase adhesiveness of the moisture setting composition, the moisture setting composition may further contain a silane coupling agent having a primary amino group. Examples of such silane coupling agents include N-(β-aminoethyl)-γ-aminopropyltrimethoxysilane, N-(β-aminoethyl)-γ-aminopropylmethyldimethoxysilane, N-(β-aminoethyl)-γ-aminopropyltriethoxysilane, γ-aminopropyltrimethoxysilane, and γ-aminopropyltriethoxysilane.

To control mechanical properties of the moisture setting composition, the moisture setting composition may further contain various fillers. Examples of such fillers include silica, silicones, diatomaceous earth, calcium carbonate, magnesium carbonate, carbon black, clay, talc, bentonite, titanium oxide, iron oxide, zinc oxide, zinc flower, cilas balloon, asbest, glass fiber, and filament. These may be used singly or in the form of a mixture of two or more types. When the strength of the moisture setting composition is needed to increase, the moisture setting composition preferably contains at least one type selected from the group consisting of silica, silicones, carbon black, clay, ultra fine calcium carbonate and zinc flower. When the elasticity of the moisture setting composition is needed to increase, the moisture setting composition preferably contains at least one type selected from the group consisting of titanium oxide, calcium carbonate, magnesium carbonate, talk, ferric oxide, zinc oxide, and cilas balloon. The content of the filler in the moisture setting composition is preferably 1 to 200 parts by mass based on the entire amount of polymer of the moisture setting composition as being 100 parts by mass.

The moisture setting composition may further contain a physical property controlling agent to control its physical properties as a solid obtained by curing, for example, hardness. Examples of such physical property controlling agents include alkylalkoxysilanes, alkylisopropenoxysilanes, silane coupling agents, silicone varnishes, and polysiloxanes. Examples of such alkylalkoxysilanes include methylmethoxysilane, dimethyldimethoxysilane, trimethylmethoxysilane, and n-propyltrimethoxysilane. Examples of such alkylisopropenoxysilanes include dimethyldiisopropenoxysilane, methyltriisopropenoxysilane and γ-glycidoxypropylmethyldiisoprepenoxysilane. Examples of such silane coupling agents include vinyltrimethoxysilane, vinyltriethoxysilane, and vinylmethyldimethoxysilane. The upper limit for the content of the physical property controlling agent in the moisture setting composition is preferably 20 parts by mass based on the entire amount of polymer of the moisture setting composition as being 100 parts by mass. The lower limit for the physical property controlling agent of the moisture setting composition is not particularly limited.

The moisture setting composition may further contain a dehydrating agent. Examples of such dehydrating agents include orthoesters and compounds having a hydrolyzable silyl group. Examples of such orthoesters include orthomethyl formic acid and orthomethyl acetic acid. Examples of such compounds having a hydrolyzable silyl group include tetraethoxysilane, methyltrimethoxysilane, vinyltrimethoxysilane and γ-methacryloxypropyltrimethoxysilane. The upper limit for the content of the dehydrating agent in the moisture setting composition is preferably 20 parts by mass based on the entire amount of polymer of the moisture setting composition as being 100 parts by mass. The lower limit for the content of the dehydrating agent in the moisture setting composition is not particularly limited.

The moisture setting composition may further contain a solvent, surface characteristic and/or weather resistance improving agent, colorant, anti-aging agent, ultraviolet adsorbing agent, optical stabilizer, or flame resistant agent. Examples of such solvents include toluene and methylethylketone. Examples of such surface characteristic and/or weather resistance improving agents include ultraviolet setting resins and oxygen setting resins. Examples of such colorants include pigments and dyes.

The moisture setting composition, because of its excellent tensile and adhesion properties, and weather resistance, due to polyurethane having a hydrolyzable silyl group and a vinyl polymer, is suitable for sealing agents and elastic adhesive agents for use in construction. Therefore, an adhesive composition according to this embodiment contains a moisture setting composition. The adhesive composition may be prepared in the form of a single component type, by mixing all predetermined components followed by sealing, placing the composition in storage, and permitting the composition to cure by absorbing moisture content from the air, after application. Alternatively, the adhesive composition may be prepared in the form of a two component type containing a main agent, which contains the moisture setting composition and optionally the epoxy resin as a main ingredient, and a curing agent, which contains the accelerator and optionally the curing agent for the epoxy resin, as a main ingredient.

Examples of the present invention and Comparative Examples will be explained below; however, the present invention will not be limited to these examples.

### <Synthesis Example 1> Polyurethane I containing a hydrolyzable silyl group

In a 2L four-neck flask equipped with a stirrer, thermometer, dropping funnel, and nitrogen introduction pipe, 28 parts by mass of 2,4-tolylenediisocyanate (TDI) and 7 parts by mass of toluene were added. Next, while 800 parts by mass of polyoxypropylene (trade name: Preminol PLM 4010, manufactured by Asahi Glass, hydroxyl value: 11, the weight average molecular weight determined by gel permeation chromatography (GPC): 17,300, diol type) from which a moisture content was previously removed sufficiently by performing a degassing operation at 100°C for 2 hours, was added dropwise to the flask, the temperature of the flask was increased up to 90°C. Subsequently, the mixture was allowed to react for 6 hours while keeping the inner temperature of the flask at 90°C to obtain polyurethane having isocyanate terminal groups. The weight average molecular weight of the polyurethane was 35,400 and the content of isocyanate was 0.415%. An infrared absorption spectrum (IR) of the polyurethane was measured, and a peak for an isocyanate group was observed at 2,250 cm⁻¹ and a peak for urethane was observed at 1,730 cm⁻¹.

As a next step, the inner temperature of the flask was kept at 70°C, 14.6 parts by mass of γ-aminopropyltrimethoxysilane (KBM 903, manufactured by Shinetsu Chemical Co.) and 10 parts by mass of toluene were added to the flask, and the mixture of the flask was stirred for 2 hours to obtain polyurethane containing a hydrolyzable silyl group. The weight average molecular weight of the polyurethane was 39,200. An IR of the polyurethane was measured, and no peak for an isocyanate was observed at 2,250 cm⁻¹. As C¹³-NMR of polyurethane was measured, methoxy carbon of a methoxysilyl group was observed at 50 ppm. Subsequently, toluene was distilled off from the resultant polyurethane to obtain polyurethane I. The solid matter of polyurethane I obtained after dehydration at 105°C for one hour was 99.6%.

### <Synthesis Example 2> Polyurethane II containing a hydrolyzable silyl group

Polyurethane II was obtained in the same manner as in Synthesis Example 1 except that the polyoxypropylene was changed to Hi flex D3000 (manufactured by Dai-ichi Kogyo Seiyaku, Co., Ltd., hydroxyl value: 36, the weight average molecular weight determined by GPC: 5,600, diol type), the content of TDI was changed to 11.4 parts by mass based on the amount of polyoxypropylene as being 100 parts by mass, and the content of KBM903 was changed to 6.3 parts by mass based on polyoxypropylene as being 100 parts by mass. The weight average molecular weight of polyurethane II was 8,000.

### <Synthesis Example 3> Polyurethane III containing a hydrolyzable silyl group

Polyurethane III was obtained in the same manner as in Synthesis Example 1 except that the polyoxypropylene was changed to Preminol PLM 3010 (manufactured by Asahi Glass, hydroxyl value: 17, the weight average molecular weight determined by GPC: 15,000, triol type), the content of TDI was changed to 15.4 parts by mass based on the amount of polyoxypropylene as being 100 parts by mass, and the content of KBM903 was changed to 3.1 parts by mass based on polyoxypropylene as being 100 parts by mass. The weight average molecular weight of polyurethane III was 39,500.

### <Production of vinyl polymer 1>

A 1000 ml pressurisable stirring type reaction vessel equipped with an electric heater was heated to 225° C. While the pressure of the reaction vessel was kept constant, a mixture containing a monomer mixture (100 parts by mass), MEK (10 parts by mass), and ditertiary butylperoxide (1 part by mass) as a polimerization initiator was supplied continuously from a raw material tank to the reaction vessel, and the reaction solution corresponding to the supply amount of the monomer mixture was collected continuously from the outlet of the reaction vessel. The composition of the monomer mixture is shown in Table 1 below. The supply rate during the continuous supply time was set at 80 g/minute and the retention time of the mixture was set at 12 minutes. Immediately after the reaction was initiated, it was observed that the reaction temperature decreased once and thereafter increased due to polymerization heat. The reaction temperature was maintained at 224 to 226° C by operating the heater. The time when the reaction temperature became stable was set as the collection initiation point for the reaction solution. As a result the reaction was continued for 25 minutes from the collection initiation point, 2 kg of the monomer mixture was supplied and 1.9 kg of the reaction solution was collected. Subsequently, after the reaction solution was introduced into a thin-film evaporator, volatile components such as unreacted monomers were separated from the reaction solution to obtain a concentrated solution of vinyl polymer 1. It was confirmed by gascromatographic analysis that no unreacted monomers were present in the concentrated solution. From the result of GPC determination using tetrahydrofuran as a solvent, the weight average molecular weight of vinyl polymer 1 in terms of polystyrene was 3,000.

### <Production of vinyl polymers 2 to 4>

Vinyl polymers 2 to 4 were obtained by performing polymerization and treatment in the same manner as in the case of vinyl polymer 1 except that the reaction conditions were changed as shown in Table 1. Analytical results of the weight average molecular weight and glass transition temperature (Tg) with respect to these vinyl polymers 1 to 4 are shown in Table 1. In Table 1, MMA represents methyl methacrylate, BA represents butyl acrylate, HA represents 2-ethylhexyl acrylate, MSi represents trimethoxysilylpropyl methacrylate, and GMA represents glycidyl methacrylate.

**[Table 1]**

| | Composition (% by mass) | | | | | Polymerization temperature (°C) | Weight average molecular weight | Tg (°C) |
|---|---|---|---|---|---|---|---|---|
| | MMA | BA | HA | MSi | GMA | | | |
| Vinyl polymer 1 | | 100 | | | | 225 | 3000 | -77 |
| Vinyl polymer 2 | 25 | | 75 | | | 230 | 2500 | -64 |
| Vinyl polymer 3 | 20 | | 70 | 5 | | 230 | 3000 | -65 |
| Vinyl polymer 4 | | 95 | | | 5 | 235 | 2900 | -57 |

### <Production of vinyl polymer 5>

Vinyl polymer P was obtained by performing polymerization and treatment in the same manner as in the case of vinyl polymer 1 except that the conditions were changed as shown in Table 2 below. In Table 2, MMA, BA and HA represent the same compounds as in Table 1. HEA represents 2-hydroxyethyl acrylate.

**[Table 2]**

| | Composition (% by mass) | | | | Polymeri zation temperature (°C) | Weight average molecular weight | Tg (°C) |
|---|---|---|---|---|---|---|---|
| | BA | HA | MMA | HEA | | | |
| Vinyl polymer P | 36 | 50 | 10 | 4 | 190 | 11,000 | -50 |

Subsequently, silylated vinyl polymer 5 was obtained by performing polymerization and treatment in the same manner as in the case of vinyl polymer 1 except that the monomer mixture was changed to vinyl polymer P, the content of TDI was changed to 6.4 parts by mass based on vinyl polymer P as being 100 parts by mass, and the content of KBM903 was changed to 3.5 parts by mass based on vinyl polymer P as being 100 parts by mass.

### <Examples 1 to 7 and Comparative Examples 1 to 3>

Polyurethanes I to III, vinyl polymers 1 to 5, silyl SAT 200 (silylated polyoxypropylene manufactured Kaneka Corporation), an epoxy resin (Epicoat 828, manufactured by Yuka Shell Epoxy Co.), an epoxy accelerator (Epicure H30, manufactured by Yuka Shell Epoxy Co.), aminosilane (A1120, manufactured by Nippon Unicar Co., Ltd), a dehydrating agent (A171, manufactured by Nippon Unicar Co., Ltd), a cure catalyst (dibutyl tin dilaurate), calcium carbonate (Hakuenka CCR manufactured by Shiraish Calcium), titanium oxide (Tipaque R820, manufactured by Ishihara Sangyo Kaisha, Ltd.), and anti-aging agent (Tinubin B75, manufactured by Ciba Speciality Chemicals) were mixed in the mixing ratios (by mass) shown in Table 3 below to obtain mixtures. From each of these mixtures, a sheet (thickness: 3mm) was manufactured and allowed to cure at ambient temperature for a week and further at 50°C for another week. Subsequently, a dumbbell No. 3 test piece was obtained from the sheet and subjected to a tensile test to measure tensile properties such as breaking strength and elongation. In the tensile test, the distance between chucks was set at 20 mm and the tensile rate of the test piece was set at 50 mm/minute. Furthermore, after rectangular test pieces (length: 50 mm, width and thickness: 12 mm) were prepared from the mixture, the test pieces was held by a pair of aluminium substrates (length and width: 50 mm, thickness: 3 mm) to form an H-shaped test body. Thereafter, the H-shaped test body was allowed to stand at 23° C at 53% RH for 7 days and subjected to a tensile test performed under the same conditions as those for the measurement of tensile properties. Adhesion property was evaluated in accordance with the reference for adhesive failure below.
Reference for adhesion failure
CF: Cohesion failure or Matrix failure is observed.
MF: Both cohesion failure and interfacial failure are observed.
AF: Interfacial failure is observed.

After a test piece was obtained from the cured sheet (length and width: 40 mm), it was adhered onto a mortar piece and subjected to a metaling weather meter test. 100 hours and 300 hours after the test piece was adhered, the surface of the test piece was visually observed. The weather resistance of the test piece was evaluated in accordance with the reference of weather resistance evaluation below. The results are shown in Table 3. In Table 3, DINP represents diisononyl phthalate.
Reference for weather resistance evaluation
A: no change
B: small cracks are observed.
C: cracks or choking are observed.

**[Table 3]**

| | | Example | | | | | | | Comparative Example | | |
|---|---|---|---|---|---|---|---|---|---|---|---|
| | | 1 | 2 | 3 | 4 | 5 | 6 | 7 | 1 | 2 | 3 |
| Polyurethane I | | | 100 | 75 | 100 | | 50 | 100 | | | |
| Polyurethane II | | 100 | | | | | | | | | 100 |
| Polyurethane III | | | | | | 100 | 50 | | | | |
| Vinyl polymer 1 | | 50 | | | | | | | | 50 | |
| Vinyl polymer 2 | | | 50 | 50 | | | | | | | |
| Vinyl polymer 3 | | | | | 50 | 50 | 50 | | | | |
| Vinyl polymer 4 | | | | | | | | 50 | | | |
| Vinyl polymer 5 | | | | 25 | | | | | | | |
| Silyl SAT200 | | | | | | | | | 100 | 100 | |
| DINP | | | | | | | | | 50 | | 50 |
| Epoxy resin | | | | | | | | 30 | | | |
| Epoxy setting resin | | | | | | | | 15 | | | |
| Dehydrating agent | | 2 | 2 | 2 | 2 | 2 | 2 | 2 | 2 | 2 | 2 |
| Aminosilane | | | | | | | | 2 | 3 | 3 | |
| Calcium carbonate | | 120 | 120 | 70 | 120 | 120 | 120 | 120 | 120 | 120 | 120 |
| Titanium oxide | | 20 | 20 | 20 | 20 | 20 | 20 | 20 | 20 | 20 | 20 |
| Cure catalyst | | 2 | 2 | 2 | 2 | 2 | 2 | 2 | 2 | 2 | 2 |
| Anti-aging agent | | 2 | 2 | 2 | 2 | 2 | 2 | 2 | 2 | 2 | 2 |
| Tensile properties | Strength (MPa) | 0.6 | 0.8 | 0.7 | 0.8 | 1.0 | 0.8 | 1.2 | 0.8 | 0.9 | 1.5 |
| | Elongation (%) | 200 | 380 | 300 | 570 | 260 | 300 | 300 | 230 | 250 | 30 |
| Adhesion property | | MF | CF | CF | CF | CF | CF | CF | AF | AF | AF |
| Weather resistance | After 100 hr. | A | A | A | A | A | A | A | C | A | C |
| | After 300 hr. | A | A | A | A | A | A | A | C | B | C |

As shown in Table 3, the test pieces of Examples 1 to 7 exhibit high tensile and adhesion properties and weather resistance compared to those of Comparative Examples 1 to 3. From this, it is demonstrated that the mixtures of Examples 1 to 7 exhibit excellent tensile an adhesive properties and weather resistance.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A moisture setting composition **characterized by** 100 parts by mass of polyurethane having a hydrolyzable silyl group and 10 to 200 parts by mass of a vinyl polymer, the polyurethane having at least two hydrolyzable silyl groups per molecule on average and the vinyl polymer having a weight average molecular weight of 500 to 30,000.

2. The moisture setting composition according to claim 1, **characterized in that** the polyurethane is obtained by a reaction of a polyurethane component having at least two isocyanate terminal groups with a component having a reactive hydrogen atom capable of reacting with the isocyanate terminal groups and an alkoxysilyl group and represented by chemical formula (1) below: 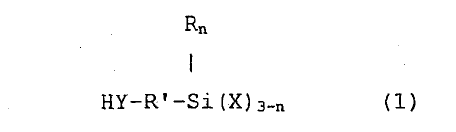 where n represents an integer of 0 to 2; "-Y-" represents a bivalent group "-NZ-" in which Z represents a hydrogen atom, alkyl group, cycloalkyl group, aryl group, or aralkyl group; "-R'-" represents an alkylene group that may have a substituent; R represents an alkyl group having 1 to 3 carbon atoms; and X represents an alkoxy group having 1 to 3 carbon atoms.

3. The moisture setting composition according to claim 1, **characterized in that** the polyurethane has a polyoxyalkylene structure.

4. The moisture setting composition according to claim 1, **characterized in that** the vinyl polymer is a (metha)acrylic copolymer.

5. The moisture setting composition according to claim 4, **characterized in that** the vinyl polymer is a copolymer formed of an acrylate ester in which an alcohol residue responsible for forming an ester has 4 to 8 carbon atoms, and a methacrylate ester in which an alcohol residue responsible for forming an ester has 1 to 4 carbon atoms.

6. The moisture setting composition according to claim 1, **characterized in that** the vinyl polymer has a hydrolyzable silyl group.

7. The moisture setting composition according to claim 6, **characterized in that** the vinyl polymer is a copolymer formed of two types of vinyl monomers and only one of the two types of vinyl monomers has a hydrolyzable silyl group.

8. The moisture setting composition according to claim 6, **characterized in that** the vinyl polymer is obtained by a reaction of a vinyl polymer component having an isocyanate group with a component having a reactive hydrogen atom capable of reacting with the isocyanate group and an alkoxysilyl group and represented by chemical formula (1) below: 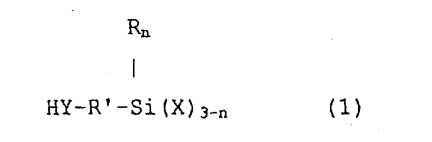 where n represents an integer of 0 to 2; "-Y-" represents a bivalent group "-NZ-" in which Z represents a hydrogen atom, alkyl group, cycloalkyl group, aryl group or aralkyl group; "-R'-" represents an alkylene group that may have a substituent; R represents an alkyl group having 1 to 3 carbon atoms; and X represents an alkoxy group having 1 to 3 carbon atoms, and the vinyl polymer component has at least one urethane bond per molecule on average.

9. The moisture setting composition according to any one of claims 1 to 8, **characterized in that** the vinyl polymer is obtained by continuous mass polymerization performed at 150 to 350°C.

10. An adhesive composition **characterized by** a moisture setting composition according to any one of claims 1 to 9.
